# EUROPEAN PATENT APPLICATION

(11) **EP 3 751 396 A1**
(43) Date of publication of application: **16.12.2020**
(21) Application number: 20189234.6
(22) Date of filing: 14.06.2017
(51) Int. Cl.: G06F 3/01, G02B 27/00

(54) **METHOD AND SYSTEM FOR PROVIDING EYE TRACKING BASED INFORMATION ABOUT A USER BEHAVIOR, CLIENT DEVICE, SERVER AND COMPUTER PROGRAM PRODUCT**

(30) Priority: 16.06.2016 EP 16174814
(62) Divisional of application: 17729163.0
(71) Applicant: Apple Inc., Cupertino, CA 95014 (US)
(72) Inventor: ROSE, Arnd, 14532 Stahnsdorf (DE); SENGELAUB, Tom, 13351 Berlin (DE); BENNDORF, Julia, 12459 Berlin (DE); VOGEL, Marvin, 10279 Berlin (DE)
(74) Representative: Lang, Johannes

(57) **Abstract**

System and Method for providing information about a user behavior of a user with regard to at least one reference object (VRS) via a network (12) from a first device (14) to a second device (16), wherein the first device (14) is associated with the user, and the first device (14) and the second device (16) each comprise reference data (VRD), which describe the at least one reference object (VRS). The first device (14) comprises an eye tracking device (20a, 20b) that captures at least one user behavior characteristic with respect to the at least on reference object (VRS), wherein the captured at least one user behavior characteristic is provided in form of user behavior data (UD), which are transmitted from the first device (14) to the second device (16) via the network (12). The second device (16) combines the transmitted user behavior data (UD) with the reference data (VRD) comprised by the second device (16), thereby providing the information about the user behavior with regard to the at least one reference object (VRS) on the second device (16).

## Description

The invention is concerned with a method for providing information about a user behavior of a user with regard to at least one reference object, especially a virtual reference object, via a network from a first device to a second device, wherein the first device is associated with the user. The invention also is concerned with a system for providing information about a user behavior, as well as a client device, a server and a computer program product.

The invention especially applies in the field of virtual reality and eye tracking systems. Virtual reality can advantageously be used for a great variety of different applications. Apart from games and entertainment, virtual reality especially in combination with eye tracking can also be used for market research, scientific research, training of persons, and so on. For example eye tracking data advantageously can provide information about where a user, who is currently experiencing the virtual environment, is looking at within this virtual environment. So, for example for market research one can use virtual environment in combination with eye tracking to analyze for example which objects, which are presented as virtual objects within the virtual environment, e.g. a virtual supermarket, attract more or less attention of the user. Also the combination of the virtual environment and an eye tracking can be used for training purposes, e.g. by simulating a virtual training situation, e.g. in form of a flight simulator or a vehicle simulator, and using the captured eye tracking data to analyze whether the user had looked at the correct objects or important instruments or was attentive or not or is tired, and so on. Especially in such situations it would be very desirable to be able to share such a virtual reality user experience also with third parties, like an observer, an instructor or supervisor, who wants to observe or analyze the behavior of the user and the user interaction with the virtual environment or also to give instructions, advice or recommendations to the user that is currently experiencing the virtual environment. but this would require to transmit the scene data of each virtual scene image presented to a user together with the associated gaze data for each virtual scene image from the first device, by means of which the users experiencing the virtual environment, to a second device, which is associated with the instructor or observer. However, the problem with that is the large amount of data associated with such virtual reality scene. Therefore, if the experience or perception of the user with a virtual reality presented to this user by means of an associated device shall be made available for a third party as well, e.g. on an associated remote device, for example via the internet, a large amount of data would have to be transferred, which would require a large bandwidth and/or much time. Especially due to the restricted available bandwidths a real-time observation of the user with respect to a virtual scene or sharing such virtual reality session of a user with such a remote third party in real time would be totally impossible.

Therefore it is an object of the present invention to provide a method, system, a client device, a server and a computer program product, which allow for providing information about a user behavior of a user with regard to at least one reference object, especially a virtual reference object, via a network from a first device to a second device in a more effective or flexible way.

This object is solved by a method, a system, a client device, a server and a computer program product with the features of the respective independent claims. Advantageous embodiments of the invention are presented in the dependent claims, the description of preferred embodiments as well as in the drawings.

According to the method according to the invention for providing information about a user behavior of the user with regard to at least one reference object, especially a virtual reference object, via a network from a first device to a second device, wherein the first device is associated with the user, the first device and the second device each comprise reference data, which describe the at least one reference object. Moreover, the first device comprises a capturing device, which comprises an eye tracking device that captures at least one user behavior characteristic with respect to the at least on reference object, wherein the captured at least one user behavior characteristic is provided in form of user behavior data by means of the first device. Further, the provided user behavior data are transmitted from the first device to the second device via the network and the second device combines the transmitted user behavior data with the reference data comprised by the second device, thereby providing the information about the user behavior with regard to the at least one reference object on the second device.

The main advantage of the invention is that the user behavior characteristic, like the user's perspective or gaze point, is captured with respect to the at least object, which allows for a correct matching between the user behavior data and the corresponding reference data, so that the user behavior data can be transmitted to the second device independent from the reference data. So, as the user behavior characteristic is captured with respect to the at least one object, the user behavior data implicitly or explicitly comprise a referencing, describing the relation between the captured user behavior characteristic and the at least one object. This referencing can advantageously be used to recreate the correct relation between the transmitted user behavior data and the reference data describing the at least one object on the second device. Such a referencing can for example be provided by a common reference coordinate system, in which e.g. a 3D digital virtual scene is defined, especially on the first device as well on the second device in form of the respective reference data. When an image of the virtual scene is presented to the user by means of the first device, the user's point of view and/or his gaze point or other user characteristics can be captured with regard to this displayed virtual scene image and be defined with respect to the defined common reference coordinate system. The gaze data, e.g. the point of view and/or the gaze point of the user defined in this reference coordinate system, can then be transmitted to the second device. The second device can then exactly reconstruct the user's point of view and/or gaze point within the 3D virtual scene on the basis of the reference data, which are comprised by the second device and which describe this 3D virtual scene on the basis of the same reference coordinate system. So the transmitted user behavior data implicitly comprise the referencing due to the fact that the user behavior characteristic is captured on the basis of this common reference coordinate system in which also the virtual scene - or in general the at least one object - described by the reference data, which are comprised by the first device as well as the second device, is defined. The user behavior data can also be provided with an explicit referencing, e.g. in the form of an explicit spatial and/or temporal marking. If for example a video stream is displayed to the user by means of the first device, during the displaying of the video stream user behavior characteristics, like gaze points and/or the points of view are captured and provided with corresponding time stamps, which temporarily correlate each captured user characteristic to a certain image of the video stream. Then the user behavior characteristics and the corresponding time stamps can be transmitted in form of the user behavior data to the second device, which also comprises the shown video in form of the reference data and the second device now advantageously can combine the transmitted user behavior data with the corresponding reference data, namely the corresponding images of the video, on the basis of the time stamps.

Advantageously, the reference data, which describe the at least one reference object, like a virtual reality scene or scenario, can be provided on the second device independently from the transmission of the user behavior data and still a correct matching between the user behavior data and the reference data is possible to reconstruct the user behavior with regard to the at least one object. Consequently, the reference data do not have to be transferred from the first device to the second device together with the user behavior data, at least not at the same time, but e.g. a priori or afterwards, or be even derived from a data source different from the first device. So, when providing the information about the user behavior with regard to the at least one reference object on the second device, only the user behavior data describing the at least one user behavior characteristic with respect to the at least one reference object needs to be transmitted from the first device to the second device and therefore the amount of data to be transferred from the first device to the second device can be reduced to a minimum. Therefore, when providing the information about a user behavior with respect to at least one reference object, the data transmission from the first to the second device can be restricted to the data, which are not a priori known, namely the data describing the user behavior, whereas the known component is the virtual environment itself and therefore can be provided separately on the second device and therefore, the transmission of data relating to such a virtual environment can be avoided.

Accordingly, the second device can be provided with the reference data and the user behavior data separately and independently, e.g. the reference data can be provided on the second device before the start of the capturing or transmission of the user behavior data from the first device to the second device. This is very advantageous because this allows for a real time or near time reconstruction of the user behavior with regard to the at least one object on the second device, because only the user behavior data have to be transmitted, which does not require a large bandwidth to provide the data on the second device in real time or near time. Also the first and second device can be provided with the reference data independently and separately, e.g. from a content provider, like in form of a broadcast. So for example the second device can be provided with the reference data without the necessity of transmitting these reference data from the first device to the second device, neither directly nor indirectly. On the other hand, it's also possible for providing the reference data on the second device to transmit these reference data from the first device to the second device, especially peer to peer. Though in this case still a large amount of data has to be transmitted, the advantage is that the transmission of the reference data can still be provided independent from the transmission of the user behavior data and thereby provides much more flexibility. For example, as already explained above, if the reference data are transmitted from the first to the second device before the user associated with the first device starts a virtual reality session, the reconstruction of this virtual with reality session on the second device can still be performed in real time or near time as at that moment of the stat of such a session the reference data are already present at and stored in the second device and only the user behavior data have to be transmitted in real time or near time.

The captured user behavior characteristic can for example be a gaze direction or gaze point of the user with respect to the at least one reference object. Additionally or alternatively capturable user behavior characteristics are described later in more detail. However, capturing the gaze direction and/or gaze point of the user as the at least one user behavior characteristic has several great advantages. First of all, from such gaze data of the user further information about the user's current state can be derived, for example whether the user is attentive or not. Moreover, gaze direction and gaze points are especially advantages in case of virtual training applications or studies. For example as the at least one object a virtual training environment, like a virtual flight simulator or driving simulator, can be presented to the user and by means of capturing the gaze direction and/or gaze points of the user with respect to the virtual training environment one can observe or analyze whether the user is paying enough attention to certain important objects or instruments within the training environment or not. Also in case of e.g. customer studies, according to which one is interested in, which objects, e.g. in a virtual supermarket, attract more or less attention of the user, by capturing the gaze direction and/or gaze points of the user with respect to such virtual objects one can determine, at which objects of the virtual environment that user has looked at more often than at others. By means of the invention now it is possible to perform such a user behavior observation and analysis also from a remote location, as the invention advantageously allows for providing the information about the user behavior with respect to the at least one object on the second device in a very effective way, thereby reducing the required bandwidth for the data transmission, as advantageously only the user behavior data have to be transmitted from the first device to the second device, but not the reference data describing the at least one object, which can be already provided a priori on the second device.

Preferably, the data transmission between the first and second device is performed wirelessly. Moreover, the network preferably is the internet. The first device can for example be any kind of computing device, preferably comprising a display device for displaying the at least one object or also a virtual reality scene to the user. For example the first device can be a mobile head mounted display with the integrated capturing device for capturing user behavior characteristics, like head movements and/or gaze directions and/or gaze points of the user with respect to the at least one object, like a displayed virtual reality.

Also the second device can in general be any kind of computing device. Especially, the second device can also be associated with a second user, and provided e.g. as mobile communication device or as normal computer, in particular comprising a display device, like a monitor, to display the result of the combination of the transferred user behavior data with the reference data. The second device also can be provided as an internet server or a cloud server, which combines the transferred user behavior data with the reference data and then provides the results for retrieval by a third device via the network, wherein the third device can be for example also associated with the second user. In this case the second device does not need to comprise a display device but only calculation means, like a processing unit, for performing the combination of the transmitted user behavior data and the reference data and especially performing a reconstruction of the user behavior with regard to the at least one object. Instead the third device can then comprise a display device for displaying the results retrieved from the second device.

According to an embodiment of the invention the at least one reference object, in general, is at least one of a reference system, especially a reference coordinate system, a digital virtual object or a video sequence. Preferably, the at least one reference object is at least one digital scene, especially a stream of digital virtual scene images, which is displayed to the user by means of the first device. In this case, the reference data preferably describe a scene model of the virtual scene. A scene image presents the scene from a certain perspective or virtual point of view. Moreover the virtual scene preferably is displayed as a 3D image, especially a continuous stream of 3D images, by means of the first device.

So for example a common reference coordinate system can be defined by the reference data on the first device as well as on the second device and then the user behavior characteristic can be captured by means of the first device with respect to this defined reference coordinate system and be transferred to the second device. By combining these transferred user behavior data with the reference data, the second device can reconstruct the user behavior characteristic with respect to the same defined underlying reference coordinate system. Moreover, similarly a scene model of a virtual scene can be provided on the first device as well as on the second device. Such a scene model can describe a plurality of virtual objects, especially their appearances and positions within the virtual space, colors and/or surface properties of objects, reflection properties of surfaces, textures as well as animations, which means the temporal changes of the virtual scene or parts thereof, like the temporal change of virtual objects, e.g. with regard to their positions and/or appearances. The reference data describing such a virtual scene model can then be provided on the first device as well as on the second device. The first device can then capture the user behavior with regard to such a virtual scene displayed by means of the first device, especially with regard to an underlying coordinate system, in which the virtual scene model is defined, the captured data can be transmitted to the second device, which then can easily reconstruct the user behavior with regard to the virtual scene on the basis of the reference data describing the scene model, again especially on the basis of the same underlying reference coordinate system without the necessity of also transferring the virtual scene data from the first to the second device at the same time.

Further, though the at least one user behavior characteristic is captured by means of the eye tracking device, the capturing device of the first device also may comprise further capturing means for capturing user behavior characteristics, which are not related to the user's eye. So, captured user behavior characteristics generally can be a position and/or orientation of at least one body part of the user. As a user behavior characteristic for example a pose of the user or a pose of one of his/her body parts, like gestures, can be captured, as well as position and orientation of the user's head and/or of the user's eyes. Preferably as user behavior characteristic also the gaze direction and/or the gaze point of the user with respect to the at least one object is captured. So e.g. the capturing device can capture the current virtual perspective of the user on the virtual scene, e.g. by determining the position and orientation of the user's eyes with respect to the reference coordinate system, in which the virtual reality or the virtual scene is defined. The perspective on the virtual scene perceived by the user may also be alterable by movement of the head of the user, e.g. when the first device is configured as head mounted display. The head movement or position and orientation of the head may be another captured user behavior characteristic.

By transmitting the data defining the position and orientation of the user's eye and/or head, e.g. with respect to said reference system, to the second device, the second device can reconstruct the current user perspective of the virtual scene by combining the transferred user behavior data with the reference data describing the model of the virtual scene. This makes it possible e.g. to present the virtual scene on the second device from the same perspective, from which the user associated with the first device is currently experiencing the virtual reality without the necessity of transmitting any data of the virtual scene, which is displayed to the user by means of the first device.

Also the user behavior characteristic can be captured with respect to a video sequence presented to the user by means of the first device. E.g. the gaze points of the user with respect to the respective images of the video sequence can be captured by means of the first device. The same video sequence can also be made available to the second device, namely be provided on the second device. Then the user behavior data describing the temporal sequence of gaze points of the user can be transferred to the second device, which then can advantageously combine the transferred user behavior data with the video sequence and as a result the video sequence can be displayed comprising the gaze points of the user associated with the first device, especially wherein this result is displayed by means of the second device or above named third device. So the gaze points with respect to the video sequence can be provided on the second device or third device without the necessity of transferring the video sequence data itself from the first device to the second device. The respective captured gaze points can be associated or provided with corresponding time stamps, e.g. with respect to the starting time of the video sequence. So by transferring the respective gaze points and the corresponding time stamps the gaze points can be combined with the video sequence images such that each gaze point can be assigned to the correct one of the images of the video sequence according to the corresponding time stamps.

According to another advantageous embodiment of the invention when transmitting the user behavior data associated with at least one user behavior characteristic the first device also transmits synchronization data, which characterize a timely correlation between the at least one captured user behavior characteristic and a current virtual scene at the time the at least one user characteristic was captured. Therefore advantageously the second device easily can assign the respective user behavior data to the corresponding reference data based on the synchronization data, which can be e.g. provided in form of above-named time stamps. This is especially advantageous in case of a temporarily changing virtual scene, especially in case the scene content changes in a predefined temporal way.

Moreover, according to another advantages embodiment of the invention the reference data describe how the virtual scene changes. Advantageously, the method according to the invention and its embodiments cannot only be applied in case of a deterministic or static virtual scene, but also in case of a nondeterministic and/or non-static and temporarily changing scene. In this case it is very advantageous to also provide the information about how the virtual scene changes in form of the reference data on the second device, e.g. a priori or to associate the user data with virtual objects and to transmit the position of the virtual objects along with the associated user data.

Moreover, according to another advantages embodiment of the invention, the reference data define a predefined temporal change of the virtual scene and/or describe how the virtual scene changes in dependency of at least one interaction event, especially an input of the user, which is received by means of the first device, or a control signal, which is transmitted from the second device to the first device.

Thereby, the virtual scene may change temporarily in a predefined and therefore deterministic way, e.g. like in case of the above described video sequence. In this case a correct combination of the transferred user behavior data with the corresponding reference data can be performed on the basis of time stamps as described above. But on the other hand, the virtual scene can also change in a nondeterministic way, e.g. the virtual scene may change in response to a certain user interaction. Also this information, namely which or what kind of user interaction causes the virtual scene to change in which way, can be provided as part of the reference data on the second device. Therefore also the scene state can be provided in a timely or regional marked fashion on the second device.

If for example a certain user interaction of the user with the virtual environment leads to the change of the virtual scene, such an interaction event, like the user is pressing the button, or an information about the new state of the virtual scene can be transmitted to the second device as well, without the necessity of transmitting the scene data itself. Such a change of the scene or state of the scene cannot only be caused by a certain interaction event performed by the user, but may also be caused by a control signal, which is transmitted from the second device to the first device. This allows for a second user, like an observer or instructor, to interact with the first user by controlling the scene content of the virtual scene shown to the first user associated with the first device. For example, the second user can initiate a calibration procedure of the eye tracker of the first device causing the first device to show calibration points to the first user. So advantageously, the way the virtual reality scene can change, and especially also in dependency on which interaction events or control signal, can also be defined and be provided as part of the reference data on the second device. So any time user behavior data are transmitted from the first device to the second device, these user behavior data can be combined with the correct reference data, namely these reference data relating to the correct state of the virtual scene at the time the user behavior characteristic was captured.

According to another advantageous embodiment of the invention the capturing device captures an interaction of the user with the at least one reference object and provides the captured interaction in form of interaction data, wherein the interaction data are transmitted from the first device to the second device. As described above the information of such interaction events can advantageously be used by the second device to recognize the change of the state of the virtual scene. The change of the state of the scene can be understood as the change of the content of the virtual scene. Therefore, also different states of the virtual scene as well as interaction events causing or triggering a change of the state of the virtual scene can also be defined as part of the reference data and advantageously be used by the second device for reconstruction of the user behavior with respect to the at least one reference object, namely the corresponding virtual scene. Such interaction of the user can be the one hand derived from the user behavior data itself, e.g. in case a certain user behavior is defined as such interaction event, like looking at a certain virtual object of the virtual scene, performing a certain interaction gesture, or the like. Such interaction can on the other hand also be captured separately, for example when the user is performing such an interaction by pushing a button or making an input by touching a touchscreen of the first device, or else. Therefore advantageously, also interactions causing the state of the virtual scene to change can be transmitted to and used by the second device to correctly assign the received user behavior data to the correct corresponding virtual scene content provided by the reference data of the second device.

Moreover, for capturing the user behavior characteristic the eye tracking device preferably captures a gaze point of the user and/or a gaze direction of the user and/or a property of the eye or an eye feature of the user with respect to the at least one reference object. So advantageously the perception of the virtual reality by the user can be provided on the second device in a corresponding way by transmitting the gaze data or eye data of the user from the first device to the second device. This makes it possible to perceive the virtual reality by a third party the same way the user perceives the virtual reality on the first device. Moreover, such gaze data are especially beneficial for applications like market research, studies or trainings of users, as on the basis of the gaze data or eye data it can be determined e.g. whether the user is paying enough attention to certain virtual objects presented in the virtual reality or which of the virtual objects in the virtual scene attract more or less attention, etc.

Further, also many more advantageous eye related data or other user behavior characteristics can be captured and transferred to the second device. Especially, for capturing the user behavior characteristic the eye tracking device may also capture at least one of a percentage of eye lid closure (also called PERCLOS), an eye lid pose, and a position of one or both eyes of the user, a head orientation of the head of the user, a head position of the user, a facial expression of the face of the user, a pupil size of a pupil of the user, an eye movement characteristic, especially an eye fixation.

So, by means of capturing the gaze point of the user and/or the gaze direction the current points of interest of the user with respect to his virtual environment can be defined and determined. By means of the eye position and/or head position and orientation of the head of the user information about the current perspective of the user on the virtual scene can be provided. Moreover, by means of above named further eye related characteristics of the user also information about the user's current state can be provided, like an emotional state or state of attention. for example, by analyzing a percentage of eye lid closure and/or an eye lid pose, like opened, fully closed or only partially closed, it can be determined whether the user is tired or not. The pupil size or change in the pupil size can be used to determine a state of excitement of the user, a facial expression of the face of the user can be used to determine the current mood, like happy or sad or angry, and certain eye movement characteristics, especially an eye fixation, can be used to determine the state of attention. By means of the user behavior characteristic the user behavior the user's current state and experience with a virtual environment can be described and be reconstructed by the second device in high detail.

Further, for capturing the user behavior characteristic or a second user behavior characteristic the capturing device also can capture a position of the user and/or a pose of the user and/or and orientation of the user and/or a gesture of the user. Such behavior characteristics can easily be captured, e.g. by means of a camera of the first device. Depending on the configuration of the first device, also a camera as part of the eye tracking device can be used for that purpose or a separate camera constituting a further capturing means of the capturing device in the alternative. By means of these behavior characteristics, the user behavior with regard to the virtual scene can advantageously be further detailed.

According to another advantageous embodiment of the invention, the second device analyzes the user behavior characteristic with respect to the at least one reference object in dependency of the received user behavior data and the reference data comprised by the second device and in dependency of the analysis a user state is determined, especially which is at least one of an awake state, and emotional state, a state of cognitive load, a performance state, an alertness state, fitness state, a state of mind or an intent of the user. Advantageously, the states of the user can easily be derived from above described user behavior data. For the purpose each of above-named states can be divided into at least two categories, like the awake state can comprise the category of being awake and the category of being not a awake, the attention state can comprise the category of being attentive and the category of being not attentive, and the performance state, the fitness state or state of cognitive load each may comprise the categories of being high or of being low. Assigning the current state of the user to one of these states can be performed by comparing one or more of the captured user behavior characteristics or certain combinations thereof to one or more respective predefined thresholds.

In the alternative or also additionally, the user behavior characteristics can also be analyzed in a corresponding way by the first device itself and the result of this analysis, especially a determined user state, can be provided as another user behavior characteristic and be transmitted to the second device.

According to another advantageous embodiment of the invention the at least one second device combines the transmitted user behavior data with the reference data comprised by the second device such that the user behavior with respect to the at least one reference object is recreated by means of the second device. Especially, the second device or the third device can provide a visual representation of the recreated user behavior characteristic with respect to the at least one reference object. For example, if the user's perspective of the virtual scene is reconstructed as the user behavior characteristic, the second device or the third can provide a visual representation of the virtual scene from the user's perspective as captured by means of the capturing device of the first device. Further, if for example the user's gaze or gaze points with respect to the virtual scene are reconstructed as the user behavior characteristic, the second device or the third device can provide a visual representation of the virtual scene with markings or marking points, which correspond to the gaze points of the user as captured by the capturing device of the first device with respect to the virtual scene as presented to the user by the first device. Thereby, the virtual scene can be - but does not necessarily have to be - presented by the second or third device from the same perspective as perceived by the user by means of the first device. Moreover the recreation of the user behavior characteristic with respect to the at least one object can also be intentionally altered compared to the captured user characteristic with respect to the at least one object, e.g. by upscaling or downscaling the resolution of the visual representation of the recreation on the second or third device. For visualizing a user behavior characteristic like gestures or the user's pose, the visual representation may also contain a representation of the user himself/herself, e.g. in form of an avatar presented within the virtual scene on the second device or the third device. Generally, the visual representation does not necessarily the have to be performed by the second device itself. The second device can also be an internet server that performs on the basis of the received user behavior data and the stored reference data a reconstruction of the user behavior with respect to the at least one reference object, wherein the result of this reconstruction can be retrieved by the third device, like a user terminal, and then be displayed by means of this third device.

Especially, when providing the visual representation of the recreated user behavior the second device or the third device, also provides a visual representation of the at least one reference object in dependency of the at least one user behavior characteristic such that the reference object is presented in the same way as the reference object was displayed to the user by means of the first device at the time the at least one user behavior was captured. So the user behavior characteristic, like a perspective, current gaze point, orientation and pose of the user can be represented at the second device in the exact same model of the virtual scene as experienced by the user by means of the first device. So for example the displayed view of the virtual scene on the second device or the third device can move in the same way as the view of the displayed virtual scene on the first device as perceived by the user. Also events triggered by certain user actions causing the virtual scene to change can be displayed analogously on the second device or the third device.

Moreover, in particular the first device continuously displays the stream of scene images and continuously captures the user behavior characteristic and the user behavior data are continuously transmitted to the second device, especially in real time. So if the user is holding a virtual reality session, the perception of the user, his behavior and his experience can be visualized to a third party by means of the second or the third device, especially in real time. In the alternative, the reconstruction of such a user session can also be performed offline, namely any time later. A real time reconstruction of the user behavior characteristic with respect to the at least one reference object has the advantage, that this allows for interaction between a second user associated with the second device or the third device and the first user associated with the first device. So for example a second user can observe the first user during the virtual reality session and share his/her virtual reality experience and e.g. provide instructions or comments or recommendations via the network to the first user or trigger certain virtual events, like an initiation of a calibration procedure of the eye tracking device of the first device, or generally also trigger events, which cause the virtual scene to change or change the state of the virtual scene presented to the first user, e.g. to examine or study his/her reactions. So, advantageously, according to this embodiment of the invention, the recreation and/or visual representation and/or analysis is performed in real time or at least in near time.

On the other hand, an offline recreation of the user behavior has the advantage that this allows for an aggregation of user behavior data of several different users. Therefore according to another advantageous embodiment of the invention, several user behavior datasets, in form of which several user behavior characteristics of several respective users, each associated with a respective first device, are transmitted from the respective first devices to the second device, are aggregated, especially by the second device or the third device.

This way, on the one hand user behavior characteristics of different users can easily be compared to each other, and on the other hand the aggregation of user behavior characteristics of different users can be used for a statistical analysis.

Thereby, according to another advantageous embodiment of the invention, the user behavior of each user is recreated with respect to the at least one reference object by means of the second device in dependency of the aggregated user behavior datasets, especially offline.

For example the gaze points of all different users can be aggregated and represented with respect to the virtual scene. Further, such an aggregation cannot only be performed over different users, but also over time. Moreover, even in case the respective users held their respective virtual reality sessions at different times, but with respect to same virtual reality model or virtual reality scenario, the offline reconstruction makes it possible to combine the respective user behavior datasets with the reference data so that the user behavior of different users can be reconstructed with regard to the same virtual scene at the same time.

The invention also relates to a system, which is configured to execute the method according to the invention or one of its embodiments.

Further, the invention relates to a system for providing information about a user behavior of a user with regard to at least one reference object via a network from a first device of the system to a second device of the system, wherein the first device is associated with the user. Further, the first device and the second device each comprise reference data, which describe the at least one reference object. Moreover, the first device comprises a capturing device, which comprises an eye tracking device, which is configured to capture at least one user behavior characteristic in relation to the at least one reference object and to provide the at least one captured user characteristic in form of user behavior data. The system is further configured to transmit the user behavior data from the first device to the second device via the network, and the second device is configured to combine the transmitted user behavior data with the reference data comprised by the second device, and thereby to provide the information about the user behavior with regard to the at least one reference object on the second device.

The invention also relates to a client device, like the first device described in connection with the method according to the invention or its embodiments, for use in a system for providing information about a user behavior of a user with regard to at least one reference object via a network from the client device of the system to a second device of the system. The client device comprises reference data, which describe the at least one reference object. Further, the client device comprises a capturing device, which comprises an eye tracking device, which is configured to capture at least one user behavior characteristic in relation to the at least one reference object and to provide the at least one captured user characteristic in form of a user behavior data, and the client device is configured to transmit the user behavior data via the network to the second device.

Preferably, the client device is configured as a mobile device, especially a head mounted device comprising a head mounted display, especially as eye glasses, virtual reality glasses, augmented reality glasses, or a mobile phone or smartphone, or a computer comprising a monitor or a screen.

The invention also relates to a server, like the second device as described in connection with the method according to the invention or its embodiments, for use in a system for providing information about a user behavior of a user with regard to at least one reference object via a network from a first device to the server. The server comprises reference data, which describe the at least one reference object, and is configured to receive user behavior data, in form of which a user behavior characteristic of the user is transmitted to the server. Further, the server is configured to combine the received user behavior data with the reference data, so that the information about the user behavior with regard to the at least one reference object is recreated.

Especially, the server is configured as a webserver, a cloud server, or a head mounted device, especially as eye glasses, virtual reality glasses, augmented reality glasses, a head mounted display, or computer comprising a monitor or a screen.

The client device and the server each comprise a corresponding processing unit, which is configured to execute the respective method steps as described with regard to the method according to the invention or its embodiments. Further, the respective processing units may comprise one or more microprocessors and/or one or more microcontrollers, respectively. Further, each of the processing units may comprise program code that is designed to perform the corresponding method steps as described with regard to the method according to the invention or its embodiments when executed by the respective processing unit. The respective program code may be stored in a data storage of the respective processing unit.

The invention also relates to a computer program product comprising program code which, when executed by a computer, e.g. the second device as described with regard to the method according to the invention or its embodiments, cause the computer to combine received user behavior data describing a user behavior characteristic with respect to at least one object, with stored reference data, describing the at least one object, so that an information about the user behavior with regard to the at least one reference object is recreated.

The computer program product can be a program as such or also a computer readable medium, in which a computer program is recorded.

The advantages described with regard to the method according to the invention and its embodiments similarly apply to the system, the client device, the server and the computer program product according to the invention. Moreover, the embodiments of the method according to the invention constitute further embodiments of the system, the client device, the server and the computer program product according to the invention.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations without departing from the scope of the invention. Thus, implementations are also to be considered as encompassed and disclosed by the invention, which are not explicitly shown in the figures and explained, but arise from and can be generated by separated feature combinations from the explained implementations. Implementations and feature combinations are also to be considered as disclosed, which thus do not have all of the features of an originally formulated independent claim. Moreover, implementations and feature combinations are to be considered as disclosed, in particular by the implementations set out above, which extend beyond or deviate from the feature combinations set out in the relations of the claims.

In the following preferred embodiments of the invention are described with regard to the figures. Therein show:
- Fig. 1: a schematic illustration of a system for providing information about a user behavior with regard to a reference object via a network from a first device to a second device according to a first embodiment of the invention;
- Fig. 2: a schematic illustration of a system for providing information about a user behavior with regard to a reference object via a network from a first device to a second device according to a second embodiment of the invention;
- Fig. 3: a flowchart for illustrating a method for providing information about a user behavior with regard to a reference object via a network according to an embodiment of the invention; and
- Fig. 4: a flowchart for illustrating a method for providing information about a user behavior with regard to a reference object via a network according to another embodiment of the invention.

In the figures elements that provide the same function are marked with identical reference signs.

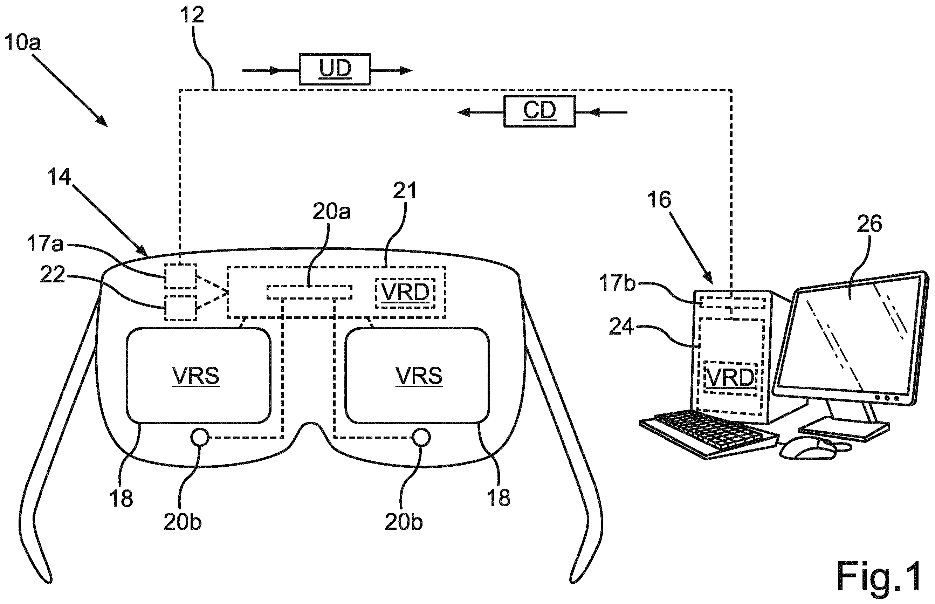

Fig. 1 shows a schematic illustration of a system 10a for providing information about a user behavior of a user with regard to at least one reference object via a network 12 from a first device 14, like a mobile client, which in this case is configured as a head mounted display, to a second device 16, according to an embodiment of the invention.

The invention especially applies in the field of virtual reality systems. Virtual reality can advantageously be used for a great variety of different applications. For example a virtual scene can be presented to a user by means of a display device, and the user can virtually walk around in this virtual scene and e.g. change the perspective of the few on the virtual scene a head movement. Also, there are many situations, for which it would be desirable to be able to share such a virtual reality user experience, which in this example is provided to a user by means of the first device 14, also with third parties, like an observer, an instructor or supervisor associated with the second device 16.

However, large amounts of data are associated with such virtual reality scenes, so that prior art systems are not capable of sharing such a virtual reality experience with third parties in a satisfactory manner. Especially a present barrier to field tests based on mobile augmented reality and virtual reality users is the resource overload of the mobile client when processing the 3D scene and transmitting large data amounts (gaze and referencing content data). Mobile client processing power limits or even avoids sharing a virtual reality scene with a third party. Additionally, available bandwidth for wireless networks limit high resolution transfer of scene data.

The invention and/or its embodiments however advantageously make it possible to reduce the necessary bandwidth to a minimum while allowing a complete recreation of the user experience with respect to the virtual reality. The recreation can be realized in real or near time to observe the user or can be stored/transmitted for an offline (timely decoupled) recreation.

According to an embodiment as presented in Fig. 1, for this purpose the system 10a comprises the first device 14 and the second device 16, each comprising reference data VRD describing a scene model of a virtual scene VRS as the at least one object. Moreover, the first device 14 and the second device 16 can be communicatively coupled to each other via the network 12, for which purpose the first device and the second device 16 comprise a respective network interface 17a, 17b. The first device 14 is configured in this example as a head mounted display comprising displaying means 18 in form of two stereo displays, so that the first device 14 is capable of displaying the virtual scene VRS based on the reference data describing the virtual scene VRS. Especially in the first device 14 is configured to display the virtual scene VRS in form of a 3D scene by means of the displaying means 18 to a user. In the alternative, the first device 14 can also be configured as mobile phone or smartphone, tablet PC, electronic mobile device with a display, or normal computer with a monitor, etc.

Moreover, for capturing the user behavior with respect to the displayed virtual scene VRS, the first device 14 also comprises capturing means, which in this case comprise an eye tracking device 20a, 20b configured to determine the gaze direction and/or gaze point of the user with respect to the displayed virtual scene VRS and optionally further eye features or eye related features. In this case the eye tracking device 20a, 20b comprises two eye cameras 20b for continuously capturing images of the eyes of the user as well as an eye tracking module 20a, which in this case is part of the processing unit 21 of the head mounted display 14. The eye tracking module 20a is configured to process and analyze the images captured by the eye cameras 20b and on the basis of the captured images to determine the gaze direction and/or the gaze point of the user and/or further eye properties or eye features, like the pupil size, the frequency of eye lid closure, etc. Moreover, the first device 14 may also comprise further capturing means 22 different from an eye tracking device for capturing different or additional user behavior characteristics, like for example a gyroscope or a scene camera for capturing images of the environment of the user, on the basis of which e.g. a head orientation of the head of the user or head movement can be determined. The capturing means 22 may also comprise a microphone for capturing speech of the user. The first device may also comprise a controller (not shown), like a hand held controller to receive a user input. Such a controller can be configured as a separate physical entity and be communicatively coupled to the head mounted part of the first device 14. The first device 14 may also comprise not-head-worn capturing means, like a camera for capturing gestures or a pose of the user. So generally, the captured user data, namely the captured user behavior characteristic, among others may include any subset of:
- a pose of the user;
- eye tracking data, like a point of regard, a gaze direction, a visual foci, a focal point,
- eye tracking events, like an eye attention, an eye fixation,
- a facial expression, like a blink, a smile,
- user emotions, like joy, hate, anger,
- user interactions, like speech, user events, a controller input,
- a position, like a position of the user, a position of one or both eyes of the user.

On the basis of the captured user behavior characteristics it can be determined for example, where a user is looking with respect to the displayed virtual scene VRS, or from which virtual point of view or perspective a user is currently looking at the displayed virtual scene VRS. These user behavior characteristics can now advantageously be transmitted in form of user behavior data UD to the second device 16 and be combined with the reference data that are, e.g. a priori, present on the second device 16. Therefore, these data relating to the virtual scene VRS, namely the reference data, do not have to be transmitted from the first device 14 to the second 16 device together with the user behavior data UD via the network 12, and therefore the data to be transmitted can be reduced to a minimum and at the same time allowing for a full recreation of the user behavior with respect to the virtual scene VRS.

So for example when the user associated with the first device 14 moves and interacts with a known virtual environment, which is displayed in form of the virtual scene VRS, e.g. when playing a game or walking through a virtual supermarket, it is only necessary to make information about the user's current state available on the second device 16 to recreate the user experience on the second device 16. The recreation may also be intentionally altered, e.g. upscaling or downscaling the resolution, for example in the region of the virtual scene VRS that comprises the user's current gaze point. In both a static and interactive virtual environment the unknown component is how the user moves and interacts with it, where the known component is the virtual environment itself. So advantageously only the user behavior characteristics with regard to the virtual environment, e.g. defined with respect to a defined coordinate system associated with the virtual scene VRS and being fixed with respect to the virtual scene VRS, can be captured and transmitted from the first device 14 to the second device 16, whereas the second device 16 is already provided with the data describing the virtual scene VRS, namely the reference data VRD, and the second device 16 can therefore advantageously combine these reference data VRD with the transmitted user behavior data UD to reconstruct the user behavior with regard to the virtual scene VRS. For this purpose, namely for the combination and recreation of the user behavior, the second device 16 can comprise a processing unit 24 with a data storage, in which the reference data VRD can be stored. Furthermore, the second device 16 can also comprise a display device 26, like a monitor, to display the result of the recreation of the user behavior with regard to the virtual scene VRS. For example the virtual scene VRS can be displayed on the display device 26 from the same perspective the user associated with the first device 14 is seeing the virtual scene VRS displayed by the first device 14.

Moreover, the reaction of the environment can be either deterministic or nondeterministic. In case of a deterministic virtual scene VRS, for the purpose of recreating the user experience, only user data, namely the user behavior characteristics as described above, are captured and made available to a third party or its technical device, like the second device 16, especially to at least one computer, host, or server of the third party. The third party or its technical device, like the second device 16, have access to the virtual scene VRS, especially by the provision of the reference data VRD on the second device 16, and the timely and/or regional marked captured user data transmitted in form of the user behavior data UD, to recreate the user experience and make it available.

In case of a nondeterministic scene, e.g. when the virtual scene VRS, especially the scene content, changes in response to a certain user action, it may be useful not only to capture the user state in form of the user behavior characteristic, but also the scene state in a timely or regional marked fashion. The captured scene data, which are provided in form of the reference data VRD, among others may then include a subset of:
- scene events and state changes,
- dynamic scene data,
- random scene content.

Also this process or procedure reduces the data to replay the session on the second device 16 to the minimum of necessary data to be transmitted via the network 12, because e.g. only the information about a certain event or change of the scene state but not the scene content itself needs to be transmitted. Also, the data can be streamed in real time or stored for later usage. Moreover, the state of the virtual scene VRS may not only change in response to a certain user action, but such a change can also be controlled or initiated by the second user, like a supervisor or observer, associated with the second device 16. For example, a second user associated with the second device 16 can initiate by means of the second device 16 a calibration of the eye tracker 20a, 20b of the first device 14, which causes the displays 18 to show a virtual scene VRS with calibration points. Such control commands can also be transmitted via the network 12 in form of control data CD from the second device 16 to the first device 14. This advantageously allows for real time interaction between the users of the first device 14 and second device 16 respectively.

Further the invention is beneficial with current CPU/GPU architectures where a transmission of a scene by the CPU would require a GPU memory access.

This system 10a allows for many advantages applications like a live streaming of one participant, like the user associated with the first device 14, to one client PC, like the second device 16, a live streaming to let other user watch what the user associated with the first device 14 is doing or a recording on mobile, like the first device 14, and later import by the second device 16.

For a live streaming of one participant to one client PC the method and system according to the invention or its embodiments allow for reducing bandwidth requirements for transmitting eye tracking data of a mobile user, like the user associated with the first device 14, or also a mobile user group, each user of the group associated with a respective first device 14, sharing the same augmented reality/ virtual reality application. For this purpose a user is wearing a virtual reality head mounted display, like the first device 14, and it is interacting with a virtual content, while the eye tracker 20a, 20b tracks the user's gaze. The information of position, orientation, user action and gaze are being transmitted to an observer station, like the second device 16, using the same virtual reality model, provided by the reference data VRD, to re-render or newly render the scene including the users gaze behavior in it. Thus the observer can see the user's interactions, perceptions and performances in order to control, guide and or monitor the user's behaviors.

According to one possible implementation, a setup can be used, where the same application is compiled for a HMD (head mounted display) device, like the first device 14, as well as for a PC like the second device 16. Both applications know about the scene which will be rendered. Moreover, the application, especially the virtual scene VRS provided by the application, is rendered live on the user system, namely the first device 14. This system, namely the first device 14, may include a mobile device to run the application, a network connection, like the network interface 17a, to transfer the data or a local memory to store them, a head mounted display can generate a virtual reality experience and a controller to interact with the application. The session can then be replayed on a desktop PC, like the second device 16, using the generated data. Therefore, the observing application on the second device 16 re-renders or renders newly or renders again the scene and generates the same view as shown on the HMD of the first device 14. This can be used to guide and observe the user associated with the first device 14, analyze and/or aggregate the gaze perception data with other user data. A live connection between the user system, namely the first device 14, and the observing system, namely the second device 16, can also be used to remotely trigger events on the user system, e.g. by above described control data CD.

Both applications, the virtual reality application on the first device 14 as well as the observation application on the second device 16, know about the data describing the shown scene, namely the reference data VRD. These may include the 3D virtual reality model, reactions to input events and animations or visualizations. Therefore a system and method is provided for streaming user's pose, eye tracking data and events of one participant to one client PC, like the second device 16, and events of the client PC to one participant, like the first device 14, comprising a controller client, like the second device 16, and a group of mobile client devices, like the first device 14. The user's system, like the first device 14, will connect to the client's PC, like the second device 16, and stream continuously pose data, eye tracking data and triggered events. The client PC will send triggered events, e.g. starting a calibration, to the user associated with the first device 14. The network 12 in this example may be a local area network or a peer to peer network, wireless or cabled.

For an application like a live streaming to let other users watch what the user associated with the first device 14 is doing a similar implementation of the system 10a can be used as described above, but now the user data, namely the user behavior data UD, are transmitted via the internet (or intranet) as the network 12 and either a cloud service or the recipients processing unit, like the second device 16, is recreating the users view.

According to another example for recording on mobile and later import, the system 10a can be configured to save the user's pose, eye tracking data and events locally on the device, namely the first device 14, itself, and a system (PC), like the second device 16, is capable of importing the recorded file and running the scene. Using the recorded data, the view will move in the same way the user did, as well as events will be triggered.

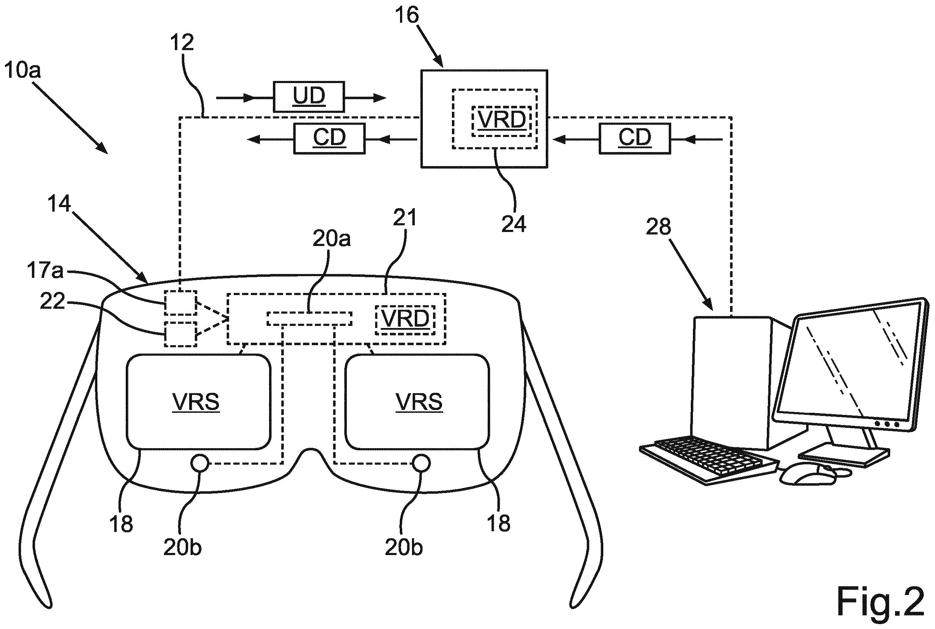

According to another example of the invention also the user's pose, eye tracking data and events can be streamed into a cloud and the collected and rendered there, which is illustrated schematically in Fig. 2. Fig. 2 shows a somatic illustration of the system 10b according to another embodiment of the invention. In this case the system 10b comprises a first device 14, which can be configured as the first device 14 as already explained with regard to Fig. 1. In in this case however, the second device 16 is not the client PC as explained with regard to Fig. 1, but instead a cloud server. So, the user behavior data UD, like the captured users pose, eye tracking data and events, are streamed via the network 12 to the cloud server 16, which combines the transmitted user behavior data UD with the stored reference data VRD to recreate the user behavior. The cloud based system, namely in the second device 16, thereby uses the data, namely the user behavior data UD, and the scene model provided by the reference data VRD, to render a view like the user associated with the first device 14. The aggregated user data can then be made available to a third party, e.g. associated with a respective third device 28 via an online portal, where e.g. the field of view of the user associated with the first device 14 is rendered into a traditional 2D video asynchrony and then made available for evaluation. Explicitly (but not necessarily) data from multiple users experiencing the same scenario by means of respective first devices 14 can be made available like this.

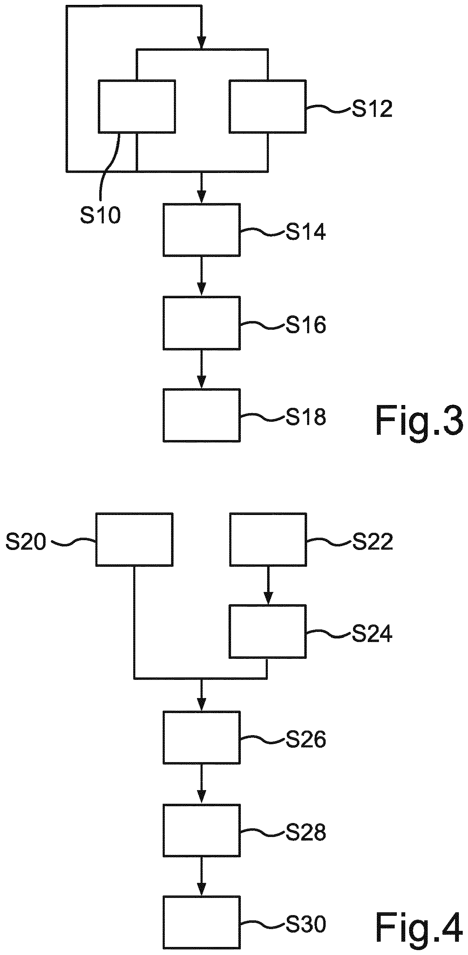

Fig. 3 shows a flowchart illustrating a method for providing information about a user behavior of a user with regard to at least one reference object via a network 12 from a first device 14 to a second device 16 according to an embodiment of the invention. According to this embodiment in step S10 a first image of a virtual scene VRS is displayed on a display device 18 of the first device 14 to a first user associated with the first device 14, wherein during displaying the first image a capturing device 20a, 20b of the first device 14 captures at least one user behavior characteristic of the user with respect to the displayed virtual scene VRS in step S12. After that the at least one captured user behavior characteristic is transmitted in step S14 in form of user behavior data UD to the second device 16, which combines the transmitted user behavior data UD with reference data VRD describing the virtual scene VRS presented in step S10, wherein these reference data VRD are a priori stored on the second device 16. By this combination, the second device 16 reconstructs the user behavior with regard to the virtual scene VRS and displays the result in step S18 on a display device of the second device 16.

In this example the displaying of the virtual scene VRS, the capturing of the corresponding user behavior characteristics, the transmitting of the user behavior data UD as well as the reconstruction and displaying of the user behavior on the second device 16 is performed continuously in form of live streaming in real time.

Fig. 4 shows a flowchart for illustrating a method for providing information about a user behavior of the user with regard to at least one reference object via a network 12 from a first device 14 to the second device 16 according to another embodiment of the invention. According to this embodiment in step S20 a stream of images presenting the virtual scene VRS to a user associated with the first device 14 is displayed, and during the displaying of the stream of images user behavior characteristics of the user are captured in step S22, which are stored on the first device 14 in step S24. After the displaying of the stream of images has been terminated, the stored user behavior data UD are transmitted via the network 12 to the second device 16 in step S26 and are combined in step S28 with stored reference data VRD describing the virtual scene VRS, which has been displayed by the first device 14 to the user, thereby reconstructing the behavior of the user with respect to the virtual scene VRS. In step S30 the result of the reconstruction is displayed, either by the second device 16 itself or by a third device 28 having retrieved the result of the reconstruction from the second device 16.

To conclude the invention and its embodiments allow for a plurality of advantageous applications, especially in the field of market research, scientific research, training of user behavior with mobile participants, game/experience streaming for online broadcast, or arrangement of a SDK (software development kit) user, providing a configured app to a server, a supervisor controlling the app, interacting with the participants' clients and especially monitoring the collective behavior of the participants, as well as allowing for a group of mobile eye tracked participants running the configured application.

Great advantages can be achieved by the invention or its embodiments, because the necessary data to be transmitted during a user session can be reduced to user's pose, user's action, user's current state including (but not limited to) eye tracking, emotional states and facial expression data for the purpose of recording, analyzing, streaming or sharing the user session.

The invention or its embodiments allow to transmit, stream and record user behavior in a virtual reality environment, like a mobile virtual environment, with minimal processing and bandwidth overhead. User behavior is encoded and transmitted in parallel to the user's interaction with the virtual environment. The encoded data can be interpreted by an independent processing unit to recreate the user's behavior.

Therefore the invention or its embodiments allow for field tests with concurrent HMD users in real time, for reducing bandwidth required to transmit user scene, for recording of user session, independent of user's display or interaction device and for reducing bandwidth demand needed for transmission and consequently enable the analysis of user perception at a central data location.

### Method and system for providing eye tracking based information about a user behavior, client device, server and computer program product

### LIST OF REFERENCE SIGNS:

- 10a, 10b: system
- 12: network
- 14: first device
- 16: second device
- 17a, 17b: network interface
- 18: displaying means
- 20a: eye tracking module
- 20b: eye camera
- 21: processing unit of the first device
- 22: capturing means
- 24: processing unit of the second device
- 26: display device
- 28: third device
- CD: control data
- UD: user behavior data
- VRD: reference data
- VRS: virtual scene

### Further Embodiments

1. Method for providing information about a user behavior of a user with regard to at least one reference object (VRS) via a network (12) from a first device (14) to a second device (16), wherein the first device (14) is associated with the user,
   **characterized in that**
   - the first device (14) and the second device (16) each comprise reference data (VRD), which describe the at least one reference object (VRS);
   - the first device (14) comprises a capturing device (20a, 20b; 22), which comprises an eye tracking device (20a, 20b) that captures at least one user behavior characteristic with respect to the at least an reference object (VRS), wherein the captured at least one user behavior characteristic is provided in form of user behavior data (UD) by means of the first device (14);
   - the user behavior data (UD) are transmitted from the first device (14) to the second device (16) via the network (12); and
   - the second device (16) combines the transmitted user behavior data (UD) with the reference data (VRD) comprised by the second device (16), thereby providing the information about the user behavior with regard to the at least one reference object (VRS) on the second device (16).
2. Method according to one
   **characterized in that**
   the at least one reference object (VRS) is at least one of:
   - a reference system, especially a reference coordinate system;
   - a digital virtual object (VRS);
   - a video sequence.
3. Method according to one of the preceding embodiments,
   **characterized in that**
   the at least one reference object (VRS) is at least one digital virtual scene (VRS), especially a stream of digital virtual scene images (VRS), which are displayed to the user by means of the first device (14).
4. Method according to embodiment 3,
   **characterized in that**
   the reference data (VRD) describe a scene model of the virtual scene (VRS).
5. Method according to one of the preceding embodiments 3 or 4,
   **characterized in that**
   when transmitting the user behavior data (UD) associated with the at least one user behavior characteristic the first device (14) also transmits synchronization data, which characterize a timely correlation between the at least one captured user behavior characteristic and the current virtual scene (VRS) at the time the at least one user characteristic was captured.
6. Method according to one of embodiments 3 to 5,
   **characterized in that**
   the reference data (VRD) describe, how the virtual scene (VRS) changes.
7. Method according to one of embodiments 3 to 6,
   **characterized in that**
   the reference data (VRD) define a predefined temporal change of the virtual scene (VRS) and/or describe how the virtual scene (VRS) changes in dependency of at least one interaction event, especially an input of the user, which is received by means of the first device (14), or a control signal (CD), which is transmitted from the second device (16) to the first device (14).
8. Method according to one of the preceding embodiments,
   **characterized in that**
   the capturing device (20a, 20b; 22) captures an interaction of the user with the at least one reference object (VRS), and provides the captured interaction in form of interaction data, wherein the interaction data are transmitted from the first device (14) to the second device (16).
9. Method according to one of the preceding embodiments,
   **characterized in that**
   for capturing the user behavior characteristic the eye tracking device (20a, 20b) captures a gaze point of the user and/or a gaze direction of the user and/or a property of the eye or an eye feature of the user with respect to the at least one reference object (VRS).
10. Method according to one of the preceding embodiments,
   **characterized in that**
   for capturing the user behavior characteristic the eye tracking device (20a, 20b) captures at least one of
   - a percentage of eye lid closure;
   - an eye lid pose;
   - an eye position of one or both eyes of the user;
   - a head orientation of the head of the user;
   - a head position of the head of the user;
   - a facial expression of the face of the user;
   - a pupil size of a pupil of the user;
   - an eye movement characteristic, especially an eye fixation.
11. Method according to one of the preceding embodiments,
   **characterized in that**
   for capturing the user behavior characteristic or a second user behavior characteristic the capturing device (20a, 20b; 22) captures at least one of
   - a position of the user;
   - a pose of the user;
   - an orientation of the user;
   - a gesture of the user.
12. Method according to one of the preceding embodiments,
   **characterized in that**
   the second device (16) analyzes the user behavior characteristic with respect to the at least one reference object (VRS) in dependency of the received user behavior data (UD) and the reference data (VRD) comprised by the second device (16) and in dependency of the analysis a user state is determined, especially which is at least one of the following:
   - an awake state;
   - an emotional state;
   - a state of cognitive load;
   - a performance state;
   - an alertness state;
   - a fitness state;
   - a state of mind; or
   - an intent of the user.
13. Method according to one of the preceding embodiments,
   **characterized in that**
   the at least one second device (16) combines the transmitted user behavior data (UD) with the reference data (VRD) comprised by the second device (16) such that the user behavior with respect to the at least one reference object (VRS) is recreated by means of the second device (16).
14. Method according to embodiment 13,
   **characterized in that**
   the second device (16) or a third device (28) provides a visual representation of the recreated user behavior characteristic with respect to the at least one reference object (VRS).
15. Method according to embodiment 14,
   **characterized in that**
   when providing the visual representation of the recreated user behavior the second device (16) or the third device (28) also provides a visual representation of the at least one reference object (VRS) in dependency of the at least one user behavior characteristic such that the reference object (VRS) is represented in the same way as the reference object (VRS) was displayed to the user by means of the first device (14) at the time the at least one user behavior characteristic was captured.
16. Method according to one of the embodiments 3 to 15,
   **characterized in that**
   the first device (14) continuously displays the stream of scene images (VRS) and continuously captures the user behavior characteristic and the user behavior data (UD) are continuously transmitted to the second device (16), especially in real time.
17. Method according to one of the embodiments 13 to 16,
   **characterized in that**
   the recreation and/or visual representation and/or analysis is performed in real time or at least in near time.
18. Method according to one of the preceding embodiments,
   **characterized in that.**
   several user behavior datasets (UD), in form of which several user behavior characteristics of several users, each associated with a respective first device (14), are transmitted from the respective first devices (14) to the second device (16), wherein the second device (16) aggregates the transmitted user behavior datasets (UD).
19. Method according to embodiment 18,
   **characterized in that.**
   the user behavior of each user is recreated with respect to the at least one reference object (VRS) by means of the second device (16) in dependency of the aggregated user behavior datasets (UD), especially offline.
20. Method according to one of the preceding embodiments,
   **characterized in that.**
   the second device (16) provides a result of the combination of the transmitted user behavior data (UD) with the reference data (VRD) for retrieval by a third device (28) via the network (12).
21. System (10a, 10b), which is configured to execute the method according to one of the preceding embodiments.
22. System (10a, 10b) for providing information about a user behavior of a user with regard to at least one reference object (VRS) via a network (12) from a first device (14) of the system to a second device (16) of the system, wherein the first device (14) is associated with the user,
   **characterized in that**
   - the first device (14) and the second device (16) each comprise reference data (VRD), which describe the at least one reference object (VRS);
   - the first device (14) comprises a capturing device (20a, 20b; 22), which comprises an eye tracking device (20a, 20b), which is configured to capture at least one user behavior characteristic in relation to the at least one reference object (VRS) and to provide the at least one captured user characteristic in form of user behavior data (UD);
   - the system is configured to transmit the user behavior data (UD) from the first device (14) to the second device (16) via the network (12); and
   - the second device (16) is configured to combine the transmitted user behavior data (UD) with the reference data (VRD) comprised by the second device (16), and thereby to provide the information about the user behavior with regard to the at least one reference object (VRS) on the second device (16).
23. Client device (14) for use in a system (10a, 10b) for providing information about a user behavior of a user with regard to at least one reference object (VRS) via a network (12) from the client device (14) of the system to a second device (16) of the system,
   **characterized in that**
   - the client device (14) comprises reference data (VRD), which describe the at least one reference object (VRS);
   - the client device (14) comprises a capturing device (20a, 20b; 22), which comprises an eye tracking device (20a, 20b), which is configured to capture at least one user behavior characteristic in relation to the at least one reference object (VRS) and to provide the at least one captured user characteristic in form of user behavior data (UD); and
   - the client device (14) is configured to transmit the first user behavior data (UD) via the network (12) to the second device (16).
24. Client device (14) according to embodiment 24,
   **characterized in that**
   the client device (14) is configured as a mobile device, especially a head mounted device comprising a head mounted display or a mobile phone or smartphone.
25. Server (16) for use in a system for providing information about a user behavior of a user with regard to at least one reference object (VRS) via a network (12) from a first device (14) to the server (16),
   **characterized in that**
   - the server (16) comprises reference data (VRD), which describe the at least one reference object (VRS);
   - the server (16) is configured to receive user behavior data (UD), in form of which a user behavior characteristic of the user is transmitted to the server (16);
   - the server (16) is configured to combine the received data with the reference data (VRD), so that the information about the user behavior with regard to the at least one reference object (VRS) is recreated.
26. Server (16) according to embodiment 26,
   **characterized in that**
   the server (16) is configured as a webserver or a head mounted device, especially as eye glasses, virtual reality glasses, augmented reality glasses, a head mounted display, or computer comprising a monitor or a screen.
27. Computer program product comprising program code which, when executed by a computer (16), cause the computer (16) to combine received user behavior data (UD) describing a user behavior characteristic with respect to at least one object, with stored reference data (VRD), describing the at least one object, so that an information about the user behavior with regard to the at least one reference object (VRS) is recreated.

## Claims

1. A method comprising:
storing, in memory, reference data (VRD) describing at least one reference object (VRS);
receiving, via a network interface (17b) at a first time, user behavior data (UD) indicative of a user behavior characteristic of a user at a plurality of second times prior to the first time;
combining, using one or more processors (24), the user behavior data (UD) and the reference data (VRD) to generate data regarding user behavior with respect to the at least one reference object at the plurality of second times.

2. The method of claim 1, wherein the at least one reference object (VRS) is at least one of a reference coordinate system, a virtual object, or a video sequence.

3. The method of claim 1, wherein the at least one reference object (VRS) includes at least one virtual scene image.

4. The method of claim 1, wherein the reference data (VRD) describes a scene model of a virtual scene including the at least one reference object (VRS).

5. The method of claim 4, wherein the reference data (VRD) further indicates how the virtual scene changes over the plurality of second times.

6. The method of claim 5, wherein the reference data (VRD) indicates a predefined temporal change and/or how the virtual scene changes in response to an input of the user.

7. The method of claim 1, wherein the user behavior data (UD) includes synchronization data indicative of a correlation between the user behavior characteristic at the plurality of second times and a virtual scene at the plurality of second times.

8. The method of claim 1, wherein the user behavior data (UD) indicates an interaction of the user with the at least one reference object (VRS) at one or more of the plurality of second times.

9. The method of claim 1, wherein the user behavior data (UD) indicates a gaze point and/or gaze direction of the user at the plurality of second times.

10. The method of claim 1, wherein the user behavior data (UD) indicates a position of the user, a pose of the user, or an orientation of the user at the plurality of second times.

11. The method of claim 1, wherein the user behavior data (UD) indicates a gesture of the user at one or more of the plurality of second times.

12. The method of claim 1, further comprising providing, at a third time after the first time, a visual representation of the generated data regarding user behavior with respect to the at least one reference object at the plurality of second times.

13. The method of claim 1, further comprising storing, in the memory (14) for access at third time after the first time, the data regarding user behavior with respect to the at least one reference object at the plurality of second times.

14. A device comprising:
memory to store reference data (VRD) describing at least one reference object (VRS);
a network interface (17b) to receive, at a first time, user behavior data (UD) indicative of a user behavior characteristic of a user at a plurality of second times prior to the first time;
one or more processors (24) to combine the user behavior data (UD) and the reference data (VRD) to generate data regarding user behavior with respect to the at least one reference object at the plurality of second times.

15. (New) A computer-readable medium storing instructions which, when executed by a device including a network interface, causes the device to perform operations comprising:
storing, in the computer-readable medium, reference data (VRD) describing at least one reference object (VRS);
receiving, via the network interface (17b) at a first time, user behavior data (UD) indicative of a user behavior characteristic of a user at plurality of second times prior to the first time;
combining, using the one or more processors (24), the user behavior data (UD) and the reference data (VRD) to generate data regarding user behavior with respect to the at least one reference object at the plurality of second times.
